# EUROPEAN PATENT APPLICATION

(11) **EP 4 195 110 A1**
(43) Date of publication of application: **14.06.2023**
(21) Application number: 22204651.8
(22) Date of filing: 31.10.2022
(51) Int. Cl.: G06N 3/096, G06N 3/09, G06N 3/045, G06N 3/082

(54) **METHOD AND APPARATUS OF TRAINING DEEP LEARNING MODEL, AND METHOD AND APPARATUS OF PROCESSING NATURAL LANGUAGE**

(30) Priority: 10.12.2021 CN 202111514073
(71) Applicant: Beijing Baidu Netcom Science Technology Co., Ltd., Beijing 100085 (CN)
(72) Inventor: Chen, Xuji, Beijing, 100085 (CN); Liu, Weixin, Beijing, 100085 (CN); Lu, Yuxiang, Beijing, 100085 (CN); Liu, Jiaxiang, Beijing, 100085 (CN); Huang, Shiwei, Beijing, 100085 (CN)
(74) Representative: Hoffmann Eitle

(57) **Abstract**

The present disclosure provides a method of training a deep learning model, which relates to a field of artificial intelligence, in particular to a deep learning technology and a natural language processing technology. A specific implementation solution includes: inputting first sample data into a first deep learning model to obtain a first output result; training the first deep learning model according to the first output result and a first target output result, so as to obtain a trained first deep learning model, wherein the first target output result is obtained by processing the first sample data using a reference deep learning model; inputting second sample data into a second deep learning model to obtain a second output result; and training the second deep learning model according to the second output result and a second target output result, so as to obtain a trained second deep learning model. The present disclosure further provides a method and an apparatus of processing a natural language, an electronic device, and a storage medium.

## Description

### TECHNICAL FIELD

The present disclosure relates to a field of an artificial intelligence technology, in particular to a deep learning technology and a natural language processing technology. More specifically, the present disclosure provides a method and an apparatus of training a deep learning model, a method and an apparatus of processing a natural language, an electronic device, and a storage medium.

### BACKGROUND

Increasing a number of parameters of a pre-trained model may improve a performance of the model. In a production environment, the pre-trained model may be distilled and compressed to reduce an amount of computation.

### SUMMARY

The present disclosure provides a method and an apparatus of training a deep learning model, a method and an apparatus of processing a natural language, a device, and a storage medium.

According to a first aspect, a method of training a deep learning model is provided, including: inputting first sample data into a first deep learning model to obtain a first output result; training the first deep learning model according to the first output result and a first target output result, so as to obtain a trained first deep learning model, wherein the first target output result is obtained by processing the first sample data using a reference deep learning model; inputting second sample data into a second deep learning model to obtain a second output result; and training the second deep learning model according to the second output result and a second target output result, so as to obtain a trained second deep learning model, wherein the second target output result is obtained by processing the second sample data using the trained first deep learning model.

According to a second aspect, a method of processing a natural language is provided, including: inputting a natural language information into a deep learning model to obtain an output result, wherein the deep learning model is trained using the method provided by the present disclosure.

According to a third aspect, an apparatus of training a deep learning model is provided, including: a first obtaining module configured to input first sample data into a first deep learning model to obtain a first output result; a first training module configured to train the first deep learning model according to the first output result and a first target output result, so as to obtain a trained first deep learning model, wherein the first target output result is obtained by processing the first sample data using a reference deep learning model; a second obtaining module configured to input second sample data into a second deep learning model to obtain a second output result; and a second training module configured to train the second deep learning model according to the second output result and a second target output result, so as to obtain a trained second deep learning model, wherein the second target output result is obtained by processing the second sample data using the trained first deep learning model.

According to a fourth aspect, an apparatus of processing a natural language is provided, including: a fourth obtaining module configured to input a natural language information into a deep learning model to obtain an output result, wherein the deep learning model is trained using the apparatus provided by the present disclosure.

According to a fifth aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method provided by the present disclosure.

According to a sixth aspect of the present disclosure, a non-transitory computer-readable storage medium having computer instructions therein is provided, and the computer instructions are configured to cause a computer to implement the method provided by the present disclosure.

According to a seventh aspect of the present disclosure, a computer program product containing a computer program is provided, and the computer program, when executed by a processor, causes the processor to implement the method provided by the present disclosure.

It should be understood that content described in this section is not intended to identify key or important feature in embodiments of the present disclosure, nor is it intended to limit the scope of the present disclosure. Other feature of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1 shows a flowchart of a method of training a deep learning model according to embodiments of the present disclosure;
FIG. 2 shows a flowchart of a method of training a deep learning model according to other embodiments of the present disclosure;
FIG. 3 shows a flowchart of a method of training a deep learning model according to other embodiments of the present disclosure;
FIG. 4 shows a schematic diagram of a method of training a deep learning model according to embodiments of the present disclosure;
FIG. 5 shows a schematic diagram of a method of training a deep learning model according to other embodiments of the present disclosure;
FIG. 6 shows a schematic diagram of a method of training a deep learning model according to other embodiments of the present disclosure;
FIG. 7 shows a schematic diagram of a method of training a deep learning model according to other embodiments of the present disclosure;
FIG. 8 shows a flowchart of a method of processing a natural language according to embodiments of the present disclosure;
FIG. 9 shows a block diagram of an apparatus of training a deep learning model according to embodiments of the present disclosure;
FIG. 10 shows a block diagram of an apparatus of processing a natural language according to embodiments of the present disclosure; and
FIG. 11 shows a block diagram of an electronic device for implementing a method of training a deep learning model and/or a method of processing a natural language according to embodiments of the present disclosure.

### DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

A pre-trained model may be distilled and compressed by using a knowledge distillation technology. In a process of distillation, the pre-trained model or a large model (hereinafter referred to as "teacher model") may perform a forward inference operation, and then a small model (hereinafter referred to as "student model") may fit an output result of the teacher model.

The teacher model is generally a single complex network or an ensemble of several networks, with good performance and generalization ability. The student model has a limited expression ability due to a small network size. A knowledge learned by the teacher model may be used to guide training of the student model, so that the student model has a performance comparable to that of the teacher model. However, a number of parameters of the student model may be greatly reduced, so as to achieve model compression and acceleration.

A knowledge distillation refers to a transfer of a model ability. According to a specific manner of transfer, the knowledge distillation may be simply classified into a target-based distillation (also known as Soft-target distillation) and a feature-based distillation. For example, a classification model may include a Softmax layer, and an output value of the Softmax layer corresponds to a probability value for a corresponding category. During the knowledge distillation, because there is already a teacher model with strong generalization ability, the student model may directly learn the generalization ability of the teacher model when the teacher model is used to guide the training of the student model. In an example, a category probability output from the Softmax layer of the teacher model may be used as a target output of the student model.

A cost of distilling and compressing the teacher model is substantially proportional to a size of the model, and the output result of the teacher model may be too large to store. Therefore, the distillation and compression process of the teacher model may be synchronized with the training of the student model. Moreover, a quantity of parameters of the teacher model may be on the order of tens of billions, so the distillation and compression operation of the teacher model may require a large amount of hardware to continuously calculate hundreds of natural days.

In addition, the expression ability of the teacher model is very strong. If the student model directly fits the output result of the teacher model, the student model may learn a lot of meaningless noise, which results in a decrease in a training effect of the student model.

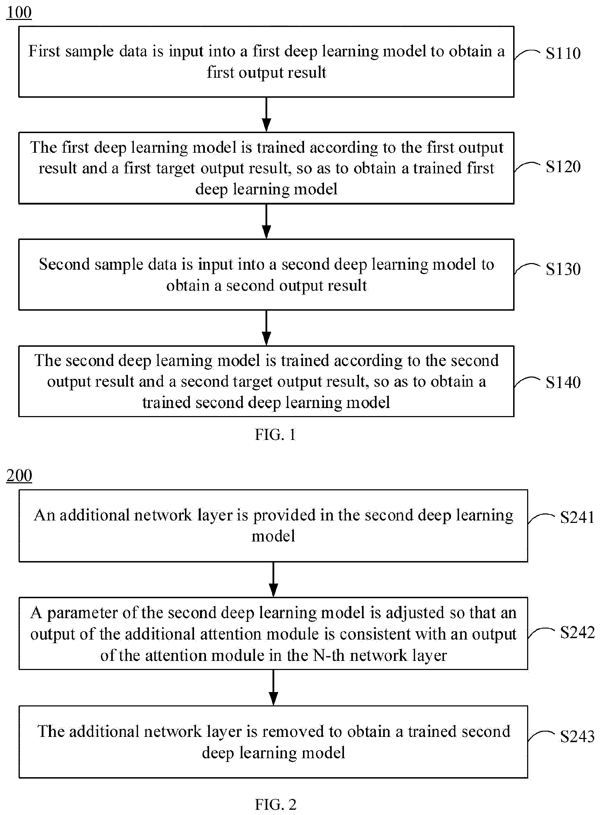

FIG. 1 shows a flowchart of a method of training a deep learning model according to embodiments of the present disclosure.

As shown in FIG. 1, a method 100 may include operation S110 to operation S140.

In operation S110, first sample data is input into a first deep learning model to obtain a first output result.

In embodiments of the present disclosure, the first deep learning model may include N network layers.

For example, each network layer may include a first attention module. In an example, the first output result may be output by the first attention module of an N^{th} network layer.

For example, N is an integer greater than or equal to 1. In an example, N=24.

For example, the first sample data may be an image containing text. In an example, the first sample data may be an image containing a number "8".

For example, the first output result may include a text and a probability that the first sample data is the text. In an example, the first sample data may be an image containing the number "8". Accordingly, the first output result may be the number 8 and a 65% probability for the number 8, a number 3 and a 30% probability for the number 3, and a number 7 and a 5% probability for the number 7.

In operation S120, the first deep learning model is trained according to the first output result and a first target output result, so as to obtain a trained first deep learning model.

In embodiments of the present disclosure, the first target output result is obtained by processing the first sample data using a reference deep learning model.

For example, the reference deep learning model may include K network layers. In an example, the reference deep learning model may be the above-mentioned teacher model.

For example, K is an integer greater than or equal to 1. In an example, K is greater than N. In an example, K=60.

For example, each of the K network layers may include an attention module. In an example, the first target output result may be output by the attention module of a K^{th} network layer. In an example, the first sample data may be an image containing the number "8". Accordingly, the first target output result may be the number 8 and a 75% probability for the number 8, the number 3 and a 20% probability for the number 3, and the number 7 and a 5% probability for the number 7.

For example, parameters of the first deep learning model are fewer than parameters of the reference deep learning model. In an example, the first deep learning model may be used as an assistant model. Parameters of the assistant model are fewer than the parameters of the teacher model.

For example, a parameter of the first deep learning model may be adjusted so that the first output result is consistent with the first target output result.

In an example, it is possible to calculate a first difference between the first output result and the first target output result by using a loss function. When the first difference is less than a predetermined first difference threshold value, it may be considered that the first output result is consistent with the first target output result.

In an example, the reference deep learning model may be a trained model. A loss function used in a process of training the reference deep learning model may be consistent with the above-mentioned loss function for calculating the first difference.

In operation S130, second sample data is input into a second deep learning model to obtain a second output result.

For example, the parameters of the first deep learning model are more than parameters of the second deep learning model. In an example, the second deep learning model may be the above-mentioned student model.

It should be noted that at least one second deep learning model may be trained at the same time. Each second deep learning model may have a different number of parameters.

In embodiments of the present disclosure, the second deep learning model includes M network layers.

For example, each network layer may include a second attention module. In an example, the second output result may be output by the second attention module in an M^{th} network layer.

For example, M is an integer greater than or equal to 1. In an example, N is greater than M. In an example, M=5. In another example, M=6. In an example, a second deep learning model S1 includes six network layers, and a second deep learning model S2 also includes six network layers, but parameters of each network layer in the second deep learning model S1 are more than parameters of each network layer in the second deep learning model S2.

For example, the second sample data may be an image containing text. In an example, the second sample data may be an image containing the number "8". Accordingly, the second output result may be the number 8 and a 55% probability for the number 8, the number 3 and a 32% probability for the number 3, and the number 7 and a 13% probability for the number 7.

In operation S140, the second deep learning model is trained according to the second output result and a second target output result, so as to obtain a trained second deep learning model.

In embodiments of the present disclosure, the second target output result is obtained by processing the second sample data using the trained first deep learning model.

For example, the second target output result may be output by the first attention module in the N^{th} network layer. In an example, the second target output result may be output by the first attention module in the N^{th} network layer of the trained first deep learning model. In an example, the second target output result may be consistent with the first target output result.

For example, a parameter of the second deep learning model may be adjusted so that the second output result is consistent with the second target output result.

In an example, it is possible to calculate a second difference between the second output result and the second target output result by using a loss function. When the second difference is less than a predetermined second difference threshold value, it may be considered that the second output result is consistent with the second target output result.

In an example, the loss function used in a process of training the second deep learning model is consistent with the above-mentioned loss function for calculating the first difference.

Through embodiments of the present disclosure, the assistant model is introduced between the teacher model and the student model, which significantly reduces a difference in the expression ability between the teacher model and the student model due to the difference in parameters, so that a prediction ability of the teacher model may be better transferred to the lightweight student model.

FIG. 2 shows a flowchart of a method of training a deep learning model according to other embodiments of the present disclosure.

As shown in FIG. 2, a method 240 may be implemented to train a second deep learning model according to a second output result and a second target output result, so as to obtain a trained second deep learning model. The detailed description will be given below with reference to operation S241 to operation S243.

In embodiments of the present disclosure, the second deep learning model includes M network layers, and each network layer includes a second attention module and a feed-forward module connected in sequence.

In operation S241, an additional network layer is provided in the second deep learning model.

In embodiments of the present disclosure, the additional network layer includes an additional attention module and an additional feed-forward module connected in sequence, and the additional attention module is connected to the feed-forward module of an M^{th} network layer.

For example, a second deep learning model S3 includes six network layers, including a network layer S3_L1 to a network layer S3_L6. Each network layer may include a second attention module and a feed-forward module connected in sequence.

A feed-forward module S3_L1F of the network layer S3_L1 is connected to a second attention module S3_L2A of the network layer S3_L2. The second attention module S3_L2A of the network layer S3_L2 is connected to a feed-forward module S3_L2F of the network layer S3_L2. The feed-forward module S3_L2F of the network layer S3_L2 is connected to a second attention module S3_L3A of the network layer S3_L3. Similarly, a connection mode of the network layer S3_L1 to the network layer S3_L6 may be determined.

A feed-forward module S3_L6F of the network layer S3_L6 is connected to the additional attention module.

In operation S242, a parameter of the second deep learning model is adjusted so that an output of the additional attention module is consistent with an output of the attention module in the N^{th} network layer.

For example, it is possible to calculate a third difference between the output of the additional attention module and the output of the attention module in the N^{th} network layer by using a loss function. When the third difference is less than a predetermined third difference threshold value, it may be considered that the output of the additional attention module is consistent with the output of the attention module in the N^{th} network layer.

In an example, the loss function used for calculating the third difference may be consistent with the above-mentioned loss function for calculating the first difference.

In operation S243, the additional network layer is removed to obtain a trained second deep learning model.

For example, when the output of the additional attention module is consistent with the output of the attention module in the N^{th} network layer, the second deep learning model S3 including six network layers may be determined as the trained second deep learning model.

Through embodiments of the present disclosure, the additional network layer is added after a last network layer of the student model to make the output of the additional attention module approximate an output of a last second attention module of the assistant model, so that the feed-forward module of an original last network layer in the student model may be fully trained. Then, the prediction ability of the teacher model may be transferred to a last feed-forward module of the student model.

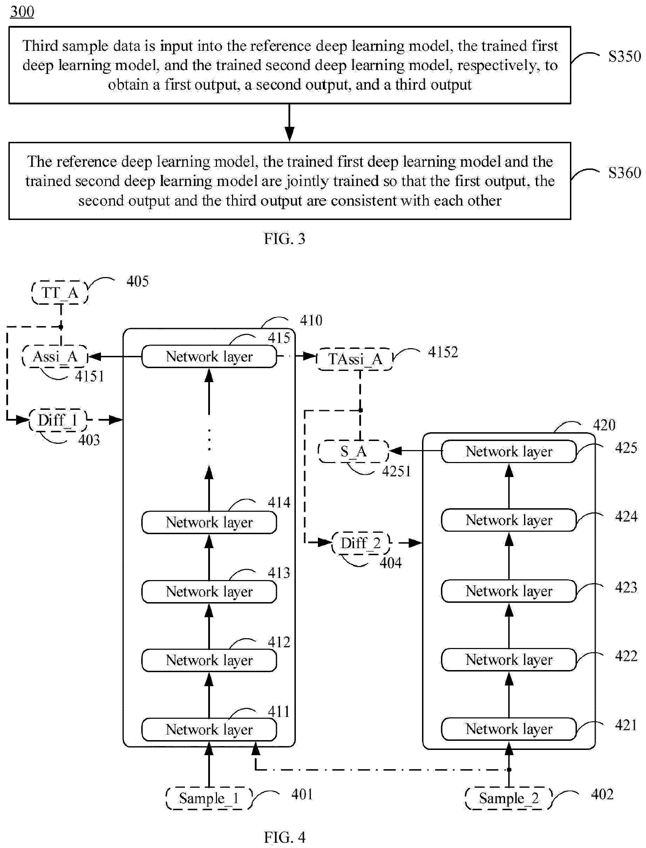

FIG. 3 shows a flowchart of a method of training a deep learning model according to other embodiments of the present disclosure.

As shown in FIG. 3, different from the method 100, a method 300 may further include operation S350 to operation S360. Operation S350 may be performed after operation S240 described above.

In operation S350, third sample data is input into the reference deep learning model, the trained first deep learning model, and the trained second deep learning model, respectively, to obtain a first output, a second output, and a third output.

For example, the third sample data may be an image containing text.

For example, the third sample data may be the same as or different from the above-mentioned first sample data.

In operation S360, the reference deep learning model, the trained first deep learning model and the trained second deep learning model are jointly trained so that the first output, the second output and the third output are consistent with each other.

For example, the parameter of the reference deep learning model, the parameter of the trained first deep learning model and the parameter of the trained second deep learning model may be jointly adjusted so that a difference between the first output, the second output and the third output is less than a predetermined threshold value.

Through embodiments of the present disclosure, the first deep learning model and the second deep learning model may be further trained to improve the performance of the models.

FIG. 4 shows a schematic diagram of a method of training a deep learning model according to embodiments of the present disclosure.

As shown in FIG. 4, a first deep learning model 410 includes N network layers, including a network layer 411, a network layer 412, a network layer 413, a network layer 414,..., a network layer 415.

A second deep learning model 420 includes M network layers, including a network layer 421, a network layer 422, a network layer 423, a network layer 424,..., a network layer 425. In such embodiments, N is greater than M.

The first deep learning model 410 may be trained firstly. For example, first sample data Sample_1 401 may be input into the first deep learning model 410, and processed by the N network layers, so as to obtain a first output result Assi_A 4151. A first difference Diff_1 403 between the first output result Assi_A 4151 and a first target output result TT_A 405 may be calculated using a loss function. The first deep learning model 410 may be trained using the first difference Diff_ 1 403.

In an example, the first sample data Sample_1 401 may be an image containing the number "8". The first target output result TT_A 405 may be (8, 0.75), (3, 0.2) and (7, 0.05). For example, (8, 0.75) indicates that the first sample data Sample_1 401 may be the number 8, and a probability that the first sample data Sample_1 401 is the number 8 is 75%. The first output result Assi_A 4151 may be (8, 0.65), (3, 0.3) and (7, 0.05). The first deep learning model 410 is trained so that the first output result Assi_A 4151 approximates the first target output result TT_A 405.

Next, when the first output result Assi_A 4151 is consistent with the first target output result TT_A 405, the second deep learning model 420 may be trained.

For example, second sample data Sample_2 402 may be input into the second deep learning model 420, and processed by the M network layers, so as to obtain a second output result S_A 4251. A second difference Diff_2 404 between the second output result S_A 4251 and a second target output result TAssi_A 4152 may be calculated using the above-mentioned loss function. The second deep learning model 420 may be trained using the second difference Diff_2 404. The second target output result TAssi_A 4152 may be obtained by inputting the second sample data Sample_2 402 into the trained first deep learning model.

In an example, the second sample data Sample_2 402 may be an image containing the number "8". The second target output result TAssi_A 4152 may be (8, 0.75), (3, 0.2) and (7, 0.05). The second output result S_A 4251 may be (8, 0.55), (3, 0.32) and (7, 0.13). The second deep learning model 420 is trained so that the second output result S_A 4251 approximates the second target output result TAssi_A 4152.

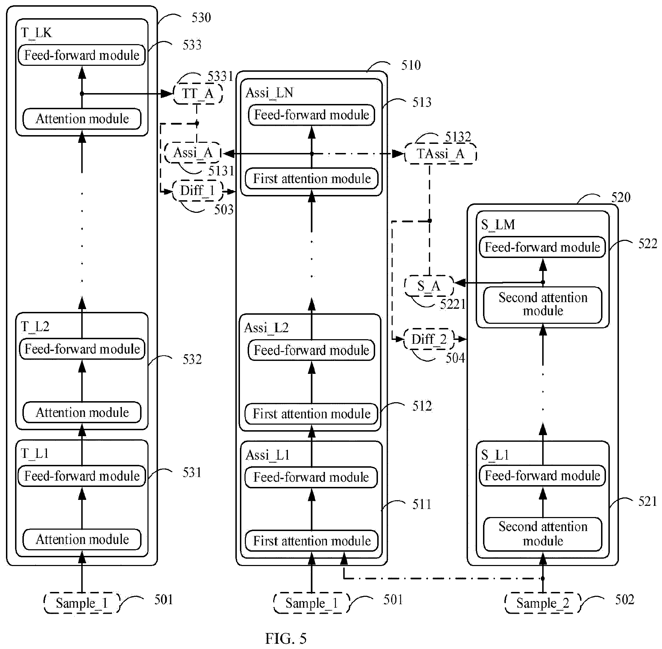

FIG. 5 shows a schematic diagram of a method of training a deep learning model according to other embodiments of the present disclosure.

As shown in FIG. 5, a first deep learning model 510 includes N network layers, including a network layer Assi_L1 511, a network Layer Assi_L2 512,..., a network layer Assi_LN 513. Each network layer may include a first attention module and a feed-forward module.

A second deep learning model 520 includes M network layers, including a network layer S_L1 521,..., a network layer S_LM 522. Each network layer may include a second attention module and a feed-forward module. In such embodiments, N is greater than M.

A reference deep learning model 530 includes K network layers, including a network layer T_L1 531, a network layer T_L2 532,..., a network layer T_LK 533. Each network layer may include an attention module and a feed-forward module. In such embodiments, K is greater than N.

The reference deep learning model 530 may be a trained model. A first target output result TT_A 5331 may be obtained by inputting the first sample data Sample_1 501 into the reference deep learning model 530. As shown in FIG. 5, the first target output result TT_A 5331 may be output by the attention module of the network layer T_LK 533.

The first deep learning model 510 may be trained firstly. For example, first sample data Sample_1 501 may be input into the first deep learning model 510, and processed by the N network layers, so as to obtain a first output result Assi_A 5131. As shown in FIG. 5, the first output result Assi_A 5131 may be output by the first attention module of the network layer Assi_LN 513. A first difference Diff_1 503 between the first output result Assi_A 5131 and a first target output result TT_A 5331 may be calculated using a loss function. The first deep learning model 510 may be trained using the first difference Diff 1 503.

Next, when the first output result Assi_A 5131 is consistent with the first target output result TT_A 5331, the second deep learning model 520 may be trained.

For example, second sample data Sample_2 502 may be input into the second deep learning model 520, and processed by the M network layers, so as to obtain a second output result S_A 5221. For example, the second output result S_A 5221 may be output by the second attention module of the network layer S_LM 522. A second difference Diff_2 504 between the second output result S_A 5221 and the second target output result TAssi_A 5132 may be calculated using the above-mentioned loss function. The second deep learning model 520 may be trained using the second difference Diff_2 504. The second target output result TAssi_A 5132 may be obtained by inputting the second sample data Sample_2 502 into the trained first deep learning model.

For the first sample data Sample_1 501, reference may be made to the above-mentioned first sample data Sample_1 401. For the second sample data Sample_2 502, reference may be made to the above-mentioned second sample data Sample_2 402. For the first output result Assi A 5131, reference may be made to the above-mentioned first output result Assi_A 4151. For the first target output result TT_A 5331, reference may be made to the above-mentioned first target output result TT_A 405. For the second output result S_A 5221, reference may be made to the above-mentioned second output result S_A 4251. For the second target output result TAssi_A 5132, reference may be made to the above-mentioned second target output result TAssi_A 4152.

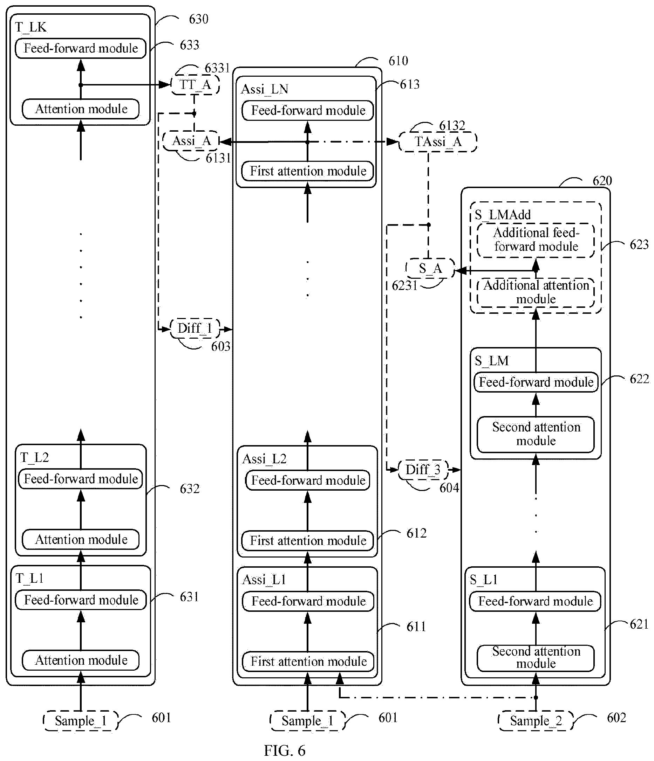

FIG. 6 shows a schematic diagram of a method of training a deep learning model according to other embodiments of the present disclosure.

As shown in FIG. 6, a first deep learning model 610 includes N network layers, including a network layer Assi_L1 611, a network layer Assi_L2 612,..., a network layer Assi_LN 613. Each network layer may include a first attention module and a feed-forward module.

A second deep learning model 620 includes M network layers, including a network layer S_L1 621,......, a network layer S_LM 622. Each network layer may include a second attention module and a feed-forward module. In such embodiments, N is greater than M.

A reference deep learning model 630 includes K network layers, including a network layer T_L1 631, a network layer T_L2 632,..., a network layer T_LK 633. Each network layer may include an attention module and a feed-forward module. In such embodiments, K is greater than N.

The reference deep learning model 630 may be a trained model. A first target output result TT_A 6331 may be obtained by inputting the first sample data Sample_1 601 into the reference deep learning model 630. As shown in FIG. 6, the first target output result TT_A 6331 may be output by the attention module of the network layer T_LK 633.

The first deep learning model 610 may be trained firstly. For example, first sample data Sample_1 601 may be input into the first deep learning model 610, and processed by the N network layers, so as to obtain a first output result Assi_A 6131. As shown in FIG. 6, the first output result Assi_A 6131 may be output by the first attention module of the network layer Assi_LN 613. A first difference Diff_1 603 between the first output result Assi_A 6131 and the first target output result TT_A 6331 may be calculated using a loss function. The first deep learning model 610 may be trained using the first difference Diff 1 603.

Next, when the first output result Assi_A 6131 is consistent with the first target output result TT_A 6331, the second deep learning model 620 may be trained.

As shown in FIG. 6, different from FIG. 5, an additional network layer S_LAdd 623 may be provided in a second deep learning model 620 when training the second deep learning model 620. The additional network layer S_LAdd 623 may include an additional attention module and an additional feed-forward module connected in sequence, and the additional attention module is connected to the feed-forward module of the network layer S_LM 622.

For example, when training the second deep learning model 620, second sample data Sample_2 602 may be input into the second deep learning model 620 to obtain an output S_A 6231 of the additional attention module. A third difference Diff_3 604 between the output S_A 6231 of the additional attention module and a second target output result TAssi_A 6132 may be calculated using the above-mentioned loss function. The second deep learning model 620 may be trained using the third difference Diff 3 604. The second target output result TAssi_A 6132 may be obtained by inputting the second sample data Sample_2 602 into the trained first deep learning model.

When the output S_A 6231 of the additional attention module is consistent with the second target output result TAssi_A 6132, the additional network layer 623 may be removed to obtain a trained second deep learning model.

For the first sample data Sample_1 601, reference may be made to the above-mentioned first sample data Sample_1 401. For the second sample data Sample_2 602, reference may be made to the above-mentioned second sample data Sample_2 402. For the first output result Assi A 6131, reference may be made to the above-mentioned first output result Assi_A 4151. For the first target output result TT_A 6331, reference may be made to the above-mentioned first target output result TT_A 405. For the output S_A 6231 of the additional attention module, reference may be made to the above-mentioned second output result S_A4251. For the second target output result TAssi_A 6132, reference may be made to the above-mentioned second target output result TAssi_A 4152.

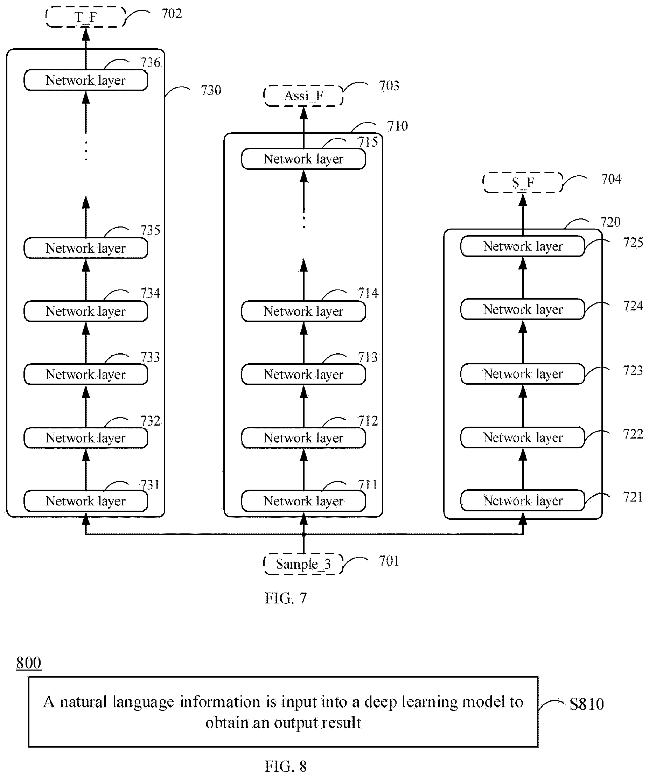

FIG. 7 shows a schematic diagram of a method of training a deep learning model according to other embodiments of the present disclosure.

As shown in FIG. 7, a first deep learning model 710 includes N network layers, including a network layer 711, a network layer 712, a network layer 713, a network layer 714,..., a network layer 715.

A second deep learning model 720 includes M network layers, including a network layer 721, a network layer 722, a network layer 723, a network layer 724,..., a network layer 725. In such embodiments, N is greater than M.

A reference deep learning model 730 includes K network layers, including a network layer 731, a network layer 732, a network layer 733, a network layer 734, a network layer 735,..., a network layer 736. In such embodiments, K is greater than M.

Third sample data Sampl_3 701 may be input into the reference deep learning model 730, the trained first deep learning model 710, and the trained second deep learning model 720, respectively, to obtain a first output T_F 702, a second output Assi_F 703, and a third output S_F 704 .

Next, a parameter of the reference deep learning model 730, a parameter of the trained first deep learning model 710 and a parameter of the trained second deep learning model 720 may be jointly adjusted, so that a difference between the first output T_F 702, the second output Assi_F 703 and the third output S_F 704 is less than a predetermined threshold value.

It should be noted that the above-mentioned network layer may be built according to a Transformer model.

FIG. 8 shows a flowchart of a method of processing a natural language according to embodiments of the present disclosure.

As shown in FIG. 8, a method 800 may include an operation 810.

In operation S810, a natural language information is input into a deep learning model to obtain an output result.

For example, the deep learning model is trained using the method provided by embodiments of the present disclosure.

For example, the above-mentioned second deep learning model may be used as the deep learning model in such embodiments. In an example, any one of the above-mentioned second deep learning model 420, the above-mentioned second deep learning model 520 and the above-mentioned second deep learning model 720 may be used as the deep learning model in such embodiments. In another example, the above-mentioned second deep learning model 620 from which the additional network layer S_LAdd 623 is removed may be used as the deep learning model in such embodiments.

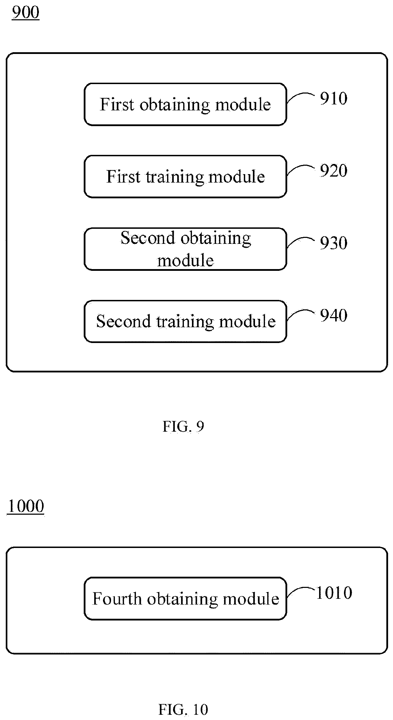

FIG. 9 shows a block diagram of an apparatus of training a deep learning model according to embodiments of the present disclosure.

As shown in FIG. 9, an apparatus 900 may include a first obtaining module 910, a first training module 920, a second obtaining module 930, and a second training module 940.

The first obtaining module 910 may be used to input first sample data into a first deep learning model to obtain a first output result.

The first training module 920 may be used to train the first deep learning model according to the first output result and a first target output result, so as to obtain a trained first deep learning model. The first target output result is obtained by processing the first sample data using a reference deep learning model.

The second obtaining module 930 may be used to input second sample data into a second deep learning model to obtain a second output result.

The second training module 940 may be used to train the second deep learning model according to the second output result and a second target output result, so as to obtain a trained second deep learning model. The second target output result is obtained by processing the second sample data using the trained first deep learning model.

In some embodiments, parameters of the first deep learning model are fewer than parameters of the reference deep learning model, and more than parameters of the second deep learning model.

In some embodiments, the first training module includes: a first adjustment unit used to adjust a parameter of the first deep learning model, so that the first output result is consistent with the first target output result.

In some embodiments, the second training module includes: a second adjustment unit used to adjust a parameter of the second deep learning model, so that the second output result is consistent with the second target output result.

In some embodiments, the first deep learning model includes N network layers, and each of the N network layers includes a first attention module; the second deep learning model includes M network layers, each of the M network layers includes a second attention module, N and M are integers greater than 1, and N is greater than M. The second target output result is output by the first attention module in an N^{th} network layer, and the second output result is output by the second attention module in an M^{th} network layer.

In some embodiments, the first deep learning model includes N network layers, and each of the N network layers includes a first attention module; the second deep learning model includes M network layers, each of the M network layers includes a second attention module and a feed-forward module connected in sequence, N and M are integers greater than 1, and N is greater than M. The second training module includes: a providing unit used to provide an additional network layer in the second deep learning model, the additional network layer includes an additional attention module and an additional feed-forward module connected in sequence, and the additional attention module is connected to the feed-forward module of an Mth network layer; a third adjustment unit used to adjust a parameter of the second deep learning model, so that an output of the additional attention module is consistent with an output of the attention module in an Nth network layer; and a removal unit used to remove the additional network layer to obtain the trained second deep learning model.

In some embodiments, the apparatus 900 further includes: a third obtaining module used to input third sample data into the reference deep learning model, the trained first deep learning model, and the trained second deep learning model, respectively, to obtain a first output, a second output, and a third output; and a third training module used to jointly train the reference deep learning model, the trained first deep learning model and the trained second deep learning model, so that the first output, the second output and the third output are consistent with each other.

FIG. 10 shows a block diagram of an apparatus of processing a natural language according to other embodiments of the present disclosure.

As shown in FIG. 10, an apparatus 1000 may include a fourth obtaining module 1010.

The fourth obtaining module 1010 may be used to input a natural language information into a deep learning model to obtain an output result.

For example, the deep learning model is trained using the apparatus provided by the present disclosure.

In the technical solution of the present disclosure, an acquisition, a storage, a use, a processing, a transmission, a provision, a disclosure, and an application of user personal information involved comply with the provisions of relevant laws and regulations, take essential confidentiality measures, and do not violate the public order and good customs.

In the technical solution of the present disclosure, authorization or consent is obtained from the user before the user's personal information is obtained or collected.

According to embodiments of the present disclosure, the present disclosure further provides an electronic device, a readable storage medium, and a computer program product.

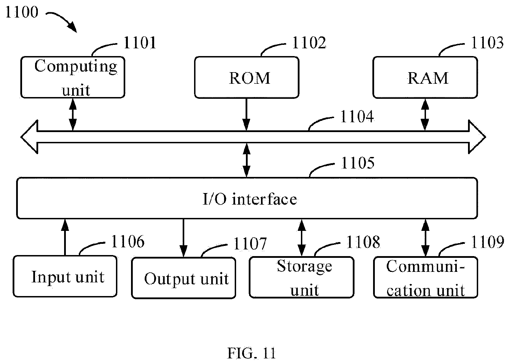

FIG. 11 schematically shows a block diagram of an exemplary electronic device 1100 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 11, the electronic device 1100 includes a computing unit 1101 which may perform various appropriate actions and processes according to a computer program stored in a read only memory (ROM) 1102 or a computer program loaded from a storage unit 1108 into a random access memory (RAM) 1103. In the RAM 1103, various programs and data necessary for an operation of the electronic device 1100 may also be stored. The computing unit 1101, the ROM 1102 and the RAM 1103 are connected to each other through a bus 1104. An input/output (I/O) interface 1105 is also connected to the bus 1104.

A plurality of components in the electronic device 1100 are connected to the I/O interface 1105, including: an input unit 1106, such as a keyboard, or a mouse; an output unit 1107, such as displays or speakers of various types; a storage unit 1108, such as a disk, or an optical disc; and a communication unit 1109, such as a network card, a modem, or a wireless communication transceiver. The communication unit 1109 allows the electronic device 1100 to exchange information/data with other devices through a computer network such as Internet and/or various telecommunication networks.

The computing unit 1101 may be various general-purpose and/or dedicated processing assemblies having processing and computing capabilities. Some examples of the computing unit 1101 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 1101 executes various methods and steps described above, such as the method of training the deep learning model and/or the method of processing the natural language. For example, in some embodiments, the method of training the deep learning model and/or the method of processing the natural language may be implemented as a computer software program which is tangibly embodied in a machine-readable medium, such as the storage unit 1108. In some embodiments, the computer program may be partially or entirely loaded and/or installed in the electronic device 1100 via the ROM 1102 and/or the communication unit 1109. The computer program, when loaded in the RAM 1103 and executed by the computing unit 1101, may execute one or more steps in the method of training the deep learning model and/or the method of processing the natural language described above. Alternatively, in other embodiments, the computing unit 1101 may be configured to perform the method of training the deep learning model and/or the method of processing the natural language by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, speech input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server for distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of training a deep learning model, comprising:
inputting (S110) first sample data (401,501,601) into a first deep learning model (410,510,610,710) to obtain a first output result (4151,5131,6131);
training (S120) the first deep learning model (410,510,610,710) according to the first output result (4151,5131,6131) and a first target output result (405,5331,6331), so as to obtain a trained first deep learning model (410,510,610,710), wherein the first target output result (405,5331,6331) is obtained by processing the first sample data (401,501,601) using a reference deep learning model (530,630,730);
inputting (S130) second sample data (402,502,602) into a second deep learning model (420,520,620,720) to obtain a second output result (4251,5221,6231); and
training (S140) the second deep learning model (420,520,620,720) according to the second output result (4251,5221,6231) and a second target output result (4152,5132,6132), so as to obtain a trained second deep learning model (420,520,620,720), wherein the second target output result (4152,5132,6132) is obtained by processing the second sample data (402,502,602) using the trained first deep learning model (410,510,610,710).

2. The method according to claim 1, wherein parameters of the first deep learning model (410,510,610,710) are fewer than parameters of the reference deep learning model (530,630,730), and more than parameters of the second deep learning model (420,520,620,720).

3. The method according to claim 1 or 2, wherein the training (S120) the first deep learning model (410,510,610,710) according to the first output result (4151,5131,6131) and a first target output result (405,5331,6331), so as to obtain a trained first deep learning model (410,510,610,710) comprises:
adjusting a parameter of the first deep learning model (410,510,610,710), so that the first output result (4151,5131,6131) is consistent with the first target output result (405,5331,6331).

4. The method according to claim 1 or 2, wherein the training (S140) the second deep learning model (420,520,620,720) according to the second output result (4251,5221,6231) and a second target output result (4152,5132,6132), so as to obtain a trained second deep learning model (420,520,620,720) comprises:
adjusting a parameter of the second deep learning model (420,520,620,720), so that the second output result (4251,5221,6231) is consistent with the second target output result (4152,5132,6132).

5. The method according to claim 1, wherein the first deep learning model (410,510,610,710) comprises N network layers (411-415,511-513,611-613,711-715), and each of the N network layers (411-415,511-513,611-613,711-715) comprises a first attention module; the second deep learning model (420,520,620,720) comprises M network layers (421-425,521-522,621-622,721-725), each of the M network layers (421-425,521-522,621-622,721-725) comprises a second attention module, N and M are integers greater than 1, and N is greater than M;
wherein the second target output result (4152,5132,6132) is output by the first attention module in an N^{th} network layer (415,513,613), and the second output result (4251,5221) is output by the second attention module in an M^{th} network layer (425,522).

6. The method according to claim 1, wherein the first deep learning model (410,510,610,710) comprises N network layers (411-415,511-513,611-613,711-715), and each of the N network layers (411-415,511-513,611-613,711-715) comprises a first attention module; the second deep learning model (420,520,620,720) comprises M network layers (421-425,521-522,621-622,721-725), each of the M network layers (421-425,521-522,621-622,721-725) comprises a second attention module and a feed-forward module connected in sequence, N and M are integers greater than 1, and N is greater than M;
wherein the training (S140) the second deep learning model (420,520,620,720) according to the second output result (4251,5221,6231) and a second target output result (4152,5132,6132), so as to obtain a trained second deep learning model (420,520,620,720) comprises:
providing (S241) an additional network layer (623) in the second deep learning model (420,520,620,720), wherein the additional network layer (623) comprises an additional attention module and an additional feed-forward module connected in sequence, and the additional attention module is connected to the feed-forward module of an M^{th} network layer (425,522,622);
adjusting (S242) a parameter of the second deep learning model (420,520,620,720), so that an output of the additional attention module is consistent with an output of the attention module in an N^{th} network layer (415,513,613); and
removing (S243) the additional network layer (623) to obtain the trained second deep learning model (420,520,620,720).

7. The method according to claim 1, further comprising:
inputting (S350) third sample data (701) into the reference deep learning model (530,630,730), the trained first deep learning model (410,510,610,710), and the trained second deep learning model (420,520,620,720), respectively, to obtain a first output (702), a second output (703), and a third output (704); and
jointly training (S360) the reference deep learning model (530,630,730), the trained first deep learning model (410,510,610,710) and the trained second deep learning model (420,520,620,720), so that the first output (702), the second output (703) and the third output (704) are consistent with each other.

8. A method of processing a natural language, comprising:
inputting (S810) a natural language information into a deep learning model to obtain an output result, wherein the deep learning model is trained using the method according to any one of claims 1 to 7.

9. An apparatus of training a deep learning model, comprising:
a first obtaining module (910) configured to input first sample data into a first deep learning model to obtain a first output result;
a first training module (920) configured to train the first deep learning model according to the first output result and a first target output result, so as to obtain a trained first deep learning model, wherein the first target output result is obtained by processing the first sample data using a reference deep learning model;
a second obtaining module (930) configured to input second sample data into a second deep learning model to obtain a second output result; and
a second training module (940) configured to train the second deep learning model according to the second output result and a second target output result, so as to obtain a trained second deep learning model, wherein the second target output result is obtained by processing the second sample data using the trained first deep learning model.

10. The apparatus according to claim 9, wherein parameters of the first deep learning model are fewer than parameters of the reference deep learning model, and more than parameters of the second deep learning model,
preferably, wherein the first training module (920) comprises:
a first adjustment unit configured to adjust a parameter of the first deep learning model, so that the first output result is consistent with the first target output result,
preferably, wherein the second training module (940) comprises:
a second adjustment unit configured to adjust a parameter of the second deep learning model, so that the second output result is consistent with the second target output result,
preferably, the apparatus further comprises:
a third obtaining module configured to input third sample data into the reference deep learning model, the trained first deep learning model, and the trained second deep learning model, respectively, to obtain a first output, a second output, and a third output; and
a third training module configured to jointly train the reference deep learning model, the trained first deep learning model and the trained second deep learning model, so that the first output, the second output and the third output are consistent with each other.

11. The apparatus according to claim 9, wherein the first deep learning model comprises N network layers, and each of the N network layers comprises a first attention module; the second deep learning model comprises M network layers, each of the M network layers comprises a second attention module, N and M are integers greater than 1, and N is greater than M; wherein the second target output result is output by the first attention module in an N^{th} network layer, and the second output result is output by the second attention module in an M^{th} network layer, or
wherein the first deep learning model comprises N network layers, and each of the N network layers comprises a first attention module; the second deep learning model comprises M network layers, each of the M network layers comprises a second attention module and a feed-forward module connected in sequence, N and M are integers greater than 1, and N is greater than M; wherein the second training module (940) comprises: a providing unit configured to provide an additional network layer in the second deep learning model, wherein the additional network layer comprises an additional attention module and an additional feed-forward module connected in sequence, and the additional attention module is connected to the feed-forward module of an M^{th} network layer; a third adjustment unit configured to adjust a parameter of the second deep learning model, so that an output of the additional attention module is consistent with an output of the attention module in an N^{th} network layer; and
a removal unit configured to remove the additional network layer to obtain the trained second deep learning model.

12. An apparatus of processing a natural language, comprising:
a fourth obtaining module (1010) configured to input a natural language information into a deep learning model to obtain an output result, wherein the deep learning model is trained using the apparatus according to any one of claims 9 to 11.

13. An electronic device (1100), comprising:
at least one processor; and
a memory communicatively connected to the at least one processor, wherein the memory stores instructions executable by the at least one processor, and the instructions, when executed by the at least one processor, cause the at least one processor to implement the method according to any one of claims 1 to 8.

14. A non-transitory computer-readable storage medium having computer instructions therein, wherein the computer instructions are configured to cause a computer to implement the method according to any one of claims 1 to 8.

15. A computer program product containing a computer program, wherein the computer program, when executed by a processor, causes the processor to implement the method according to any one of claims 1 to 8.
